# EUROPÄISCHE PATENTSCHRIFT

(11) **EP 2 907 626 B1**
(45) Veröffentlichungstag und Bekanntmachung des Hinweises auf die Patenterteilung: **13.10.2021**
(21) Anmeldenummer: 15000104.8
(22) Anmeldetag: 16.01.2015
(51) Int. Cl.: B25J 9/16, G01L 5/28, G05B 19/406

(54) **Verfahren und Vorrichtung zum Festlegen einer Manipulatorachse**
Method and device for fixing a manipulator axle
Procédé et dispositif d'immobilisation d'un axe de manipulateur

(30) Priorität: 12.02.2014 DE 102014001923
(43) Veröffentlichungstag der Anmeldung: 19.08.2015
(73) Patentinhaber: KUKA Deutschland GmbH, 86165 Augsburg (DE)
(72) Erfinder: Benali, Zoubir, 86199 Augsburg (DE); Hagenauer, Andreas, 86316 Friedberg (DE); Poth, Stefan, 86420 Diedorf (DE)
(74) Vertreter: Schlotter, Alexander Carolus Paul

(56) Entgegenhaltungen:
- EP-A1- 1 239 354
- EP-A1- 1 857 229
- EP-A2- 1 215 475
- EP-A2- 2 108 933
- EP-A2- 2 631 043
- EP-B1- 1 806 837
- DE-A1-102013 010 406
- None

## Beschreibung

Die vorliegende Erfindung betrifft ein Verfahren und eine Vorrichtung zum Festlegen wenigstens einer Achse eines Robotermanipulators, wobei unter einem Festlegen einer Achse ein Halten der bewegungslosen Achse verstanden wird.

Haltebremsen bei Robotern sind zwar grundsätzlich bereits sehr zuverlässig. Insbesondere für sicherheitskritische Situationen soll jedoch ein Ausfallrisiko weiter reduziert werden.

Auf der anderen Seite besteht ein Problem bei einer Verwendung von Antrieben, die nur eine Bremse umfassen, darin, das maximal akzeptable Restrisiko einer ungewollten Bewegung durch ein einkanaliges System zu realisieren.

Daher ist es nach betriebsinterner Praxis bekannt, einen zyklischen Bremsentest durchzuführen, um schleichende Veränderungen einer Leistung einer Bremse zu erfassen. Bei Unterschreiten einer vorgegebenen Leistungsfähigkeit wird die betreffende Bremse ausgetauscht. Dieses Verfahren ist jedoch für Situationen, in denen die Bremsleistung spontan nachlässt, nicht geeignet.

Ein anderes nach betriebsinterner Praxis bekanntes Verfahren besteht daher darin, die Bremse, insbesondere bei sicherheitskritischen Anwendungen, gar nicht zu schließen bzw. zu verwenden. Ein Stillstand der Achse wird stattdessen aktiv durch ein entsprechend geregeltes Moment des Antriebs realisiert und entspricht somit der Stoppkategorie 2 nach der DIN EN 60204-1:2007-06, die drei Kategorien einer Stoppfunktion für Manipulatoren definiert:

| | |
|---|---|
| Stopp 0: | ungesteuertes Stillsetzen durch sofortiges Unterbrechen der Energiezufuhr zu den Antriebselementen; |
| Stopp 1: | gesteuertes Stillsetzen, bei dem die Energiezufuhr zu den Antriebsetementen beibehalten wird, um das Stillsetzen zu erzielen. Die Energiezu |
| | fuhr wird unterbrochen, wenn der Stillstand erreicht ist oder die zulässige Zeit zum Stoppen überschritten ist; und |
| Stopp 2: | gesteuertes Stillsetzen, bei dem die Energiezufuhr zu den Antriebselementen beibehalten wird. |

Diese drei Kategorien können steuerungstechnisch auf verschiedene Art und Weise umgesetzt werden.

Indem ein Stillstand der Achse statt durch eine geschlossene Bremse aktiv durch ein entsprechend geregeltes Moment des Antriebs realisiert wird, entsteht der Nachteil, den Manipulator in einem aktiven Zustand zu halten, welcher Energie benötigt und zudem zu einer Geräuschbelästigung führen kann.

Aus der DE 10 2013 010 406 A1 ist ein Verfahren zur Diagnose von Bremsstörungen eines Motors in einem Roboter bekannt, wobei ein Diagnostizieren, ob eine Störung in der Bremse vorliegt, ausgeführt wird, während der Motor erregt wird und die Bremse aktiviert ist, und die Störung der Bremse gemeldet wird, falls diagnostiziert wird, dass die Störung in der Bremse vorliegt, ohne die Erregung des Motors zu unterbrechen und ohne die Bremse zu lösen.

Eine Aufgabe einer Ausführung der vorliegenden Erfindung ist es, den Betrieb eines Robotermanipulators zu verbessern.

Diese Aufgabe wird durch ein Verfahren mit den Merkmalen des Anspruchs 1 gelöst. Anspruch 12 stellt einen Robotermanipulator zum Durchführen eines erfindungsgemäßen Verfahrens unter Schutz, Anspruch 13 schützt ein Computerprogramm, welches ein erfindungsgemäßes Verfahren ausführt, Anspruch 14 ein Computerprogrammprodukt, insbesondere ein Speichermedium, mit einem solchen Computerprogramm. Die Unteransprüche betreffen bevorzugte Weiterbildungen.

Ein erfindungsgemäßes Verfahren zum Festlegen einer oder mehrerer, insbesondere aller, Achsen eines Robotermanipulators umfasst mehrere nachfolgend erläuterte Schritte. Dabei können zwei oder mehrere der Schritte sequenziell und/oder parallel ausgeführt werden. Das Verfahren wird im Folgenden am Beispiel einer einzelnen Achse eines einzelnen Robotermanipulators beschrieben, ohne hierauf eingeschränkt zu sein. Vielmehr kann das Verfahren auch zum Festlegen mehrerer Achsen eines oder mehrerer Robotermanipulatoren verwendet werden.

In einem Schritt wird eine Bremse, insbesondere eine Haltebremse, der Achse geschlossen. Eine solche Bremse kann insbesondere eine mechanische, hydraulische und/oder pneumatische Bremse, insbesondere eine Federbremse, aufweisen, insbesondere sein. In einer Ausführung ist die Bremse eine elektrisch und/oder magnetisch betätigbare, insbesondere betätigte, Bremse. In einer Ausführung ist die Bremse eine normal bzw. energielos geschlossene Bremse, die aktiv gelüftet werden muss und daher auch als Sicherheitsbremse bezeichnet wird.

In einer Ausführung wird, insbesondere vorab, die Achse des Robotermanipulators aktiv in einen Stillstand überführt, insbesondere, indem ihr Antrieb entsprechende Bremsmomente auf die Achse aufprägt.

In einem weiteren Schritt wird nach dem Schließen der Bremse eine Aktuierung eines Antriebs der Achse durch eine Bewegungsregelung deaktiviert.

Die Bewegungsregelung kann in einer Ausführung eine Positionsregelung, eine Geschwindigkeitsregelung, eine Momenten- bzw. Kraftregelung, und/oder eine Admittanz- bzw. Impedanzregelung aufweisen, insbesondere sein. Zur kompakteren Darstellung wird nachfolgend durch den Begriff Kraft auch ein Drehmoment, d.h. ein antiparalleles Kräftepaar, verallgemeinernd als Kraft bezeichnet. Die Bewegungsregelung kann in einer oder mehreren Hierarchien kaskadiert sein, insbesondere mit einer äußeren Kaskade, die beispielsweise eine Positionsregelung umfasst und einer inneren Kaskade, die beispielsweise eine Stromregelung umfasst.

In einem weiteren Schritt wird die Funktion der geschlossenen Bremse, insbesondere weiterhin durch die Bewegungsregelung, überwacht. Insbesondere kann dieser Schritt zeitlich parallel zu den anderen Schritten des erfindungsgemäßen Verfahrens erfolgen, insbesondere ständig und/oder während der Robotermanipulator operiert, insbesondere seine Steuerung mit Energie versorgt wird. Die Überwachung kann auf verschiedene Weisen erfolgen, wobei auf einige im Laufe der weiteren Beschreibung detaillierter eingegangen wird.

Falls die Überwachung einen Fehlerzustand der Bremse erfasst, wird die deaktivierte Aktuierung des Antriebs wieder aktiviert. Dadurch kann das Festlegen der Achse wieder - insbesondere auch oder ausschließlich - durch den Antrieb und nicht mehr nur allein bzw. nicht mehr auch durch die Bremse erfolgen.

Auf diese Weise können in einer Ausführung die Nachteile eines aktiven Festlegens der Achse durch eine entsprechend geregelte Kraft ihres Antriebs, insbesondere ein entsprechender Energieverbrauch und/oder eine resultierende Geräuschemission, reduziert werden. Zusätzlich oder alternativ kann auch ein spontanes Versagen der Bremse durch die Re-aktivierung der Aktuierung der Achse durch die Bewegungsregelung, sicherheitstechnisch beherrscht werden, wobei in einer vorteilhaften Weiterbildung eine auch bei geschlossener Bremse weiter erfolgende bzw. durchgeführte Bewegungsregelung besonders rasch eingreifen und so die Festlegung der Achse bewirken bzw. sicherstellen kann. Erfindungsgemäß wird unter einer Aktuierung eines Antriebs einer Achse durch eine Bewegungsregelung das Übertragen von Energie durch die Bewegungsregelung an den Antrieb verstanden, unter einem Deaktivieren einer Aktuierung eines Antriebs einer Achse durch eine Bewegungsregelung bzw. unter einem Deaktivieren einer durch die Bewegungsregelung erfolgenden Aktuierung eines Antriebs einer Achse entsprechend die Unterbrechung einer solchen Übertragung von Energie. In einer Ausführung arbeitet die Bewegungsregelung bei geschlossener Bremse weiter, insbesondere kann die Bewegungsregelung mit Energie und/oder Sensorsignalen versorgt werden, wobei lediglich die Aktuierung des Antriebs durch diese weiter Bewegungsregelung deaktiviert, das heißt eine Übertragung von Energie durch die Bewegungsregelung an den Antrieb unterbrochen wird. Dies lässt sich am Beispiel einer Kraftfahrzeugkupplung veranschaulichen, bei der durch Auskuppeln die Aktuierung der Antriebsräder durch den (weiterhin arbeitenden) Motor deaktiviert und durch Schließen der Kupplung wieder aktiviert wird.

Ein Antrieb im Sinne der vorliegenden Erfindung kann insbesondere einen oder mehrere Elektromotoren umfassen. Ein Elektromotor kann insbesondere zur Umwandlung von elektrische in mechanische Energie eingerichtet sein. Ein Elektromotor wird vorzugsweise mit Gleich- und/oder Wechselstrom betrieben, wobei der Wechselstrom insbesondere eine bestimmte Frequenz und/oder eine bestimmte Amplitude aufweisen kann. Vorzugsweise ist ein Elektromotor als bürstenloser Gleichstrommotor, Synchronmaschine oder als Asynchronmaschine ausgeführt. Insbesondere kann ein Motor eine elektronische Kommutierung aufweisen. Bevorzugt weist der Motor einen Umrichter und/oder einen Verstärker, insbesondere einen Pulsweitenmodulations ("PWM")-Verstärker auf.

Eine Bremse im Sinne der vorliegenden Erfindung dient vorzugsweise zum Aufbringen eines Haltemoments oder eines Teils einer Haltekraft zum Bremsen oder Festlegen einer Robotermanipulatorachse. Wie vorstehend erläutert, wird vorliegend insbesondere auch ein (Dreh)-Moment verallgemeinert als Kraft bezeichnet. Unter einem Festlegen wird vorliegend ein Halten einer bewegungslosen Achse verstanden.

Eine Aktuierung im Sinne der vorliegenden Erfindung kann insbesondere einen oder mehrere Antriebe einer Robotermanipulatorachse umfassen. Zusätzlich oder alternativ kann eine Aktuierung einen oder mehrere Regelkreise umfassen, die in einer Ausführung hierarchisch kaskadiert sind, parallel operieren und/oder zustandsabhängig aktiviert werden. Dabei kann ein Zustand ein Zustand des erfindungsgemäßen Verfahrens, ein Zustand des Robotermanipulators und/oder ein Zustand aus einer Umgebung des Robotermanipulators sein, insbesondere einer Vorrichtung und/oder eines Verfahrens.

Als Reaktion auf eine Erfassung eines Fehlerzustands der Bremse können verschiedene Maßnahmen erfolgen. Erfindungsgemäß erfolgt ein (Re-)Aktivieren der Aktuierung des Antriebs der betreffenden Robotermanipulatorachse durch die Bewegungsregelung. Dadurch kann ein aktives Festlegen der Robotermanipulatorachse durch den Antrieb erfolgen.

Eine Überwachung im Sinne der vorliegenden Erfindung ist insbesondere eine zielgerichtete Beobachtung, insbesondere der Bremse, und Informationserhebung, insbesondere über die Funktion der Bremse. Eine Überwachung kann insbesondere eine Erfassung und Auswertung von Zuständen der Bremse und/oder des Antriebs, der Aktuierung, der Achse und/oder des Robotermanipulators umfassen, insbesondere sein. Eine Überwachung dient insbesondere einer Erhöhung einer Sicherheit von Mensch und Maschine. Vorzugsweise dient eine Überwachung der Erhöhung der Sicherheit von Menschen und Vorrichtungen der Robotermanipulatoranordnung. Zusätzlich oder alternativ kann eine Überwachung auch der Erhöhung der Sicherheit von Menschen und Vorrichtung dienen, welche mit der Robotermanipulatoranordnung zusammenwirken und/oder sich im Gefahrenbereich der Robotermanipulatoranordnung befinden. Eine Überwachung weist vorzugsweise einen Vergleich von Ist- und Soll-Werten auf. Eine Überwachung kann einzuhaltende Grenzwerte, insbesondere positionsabhängige Grenzwerte (z. B. Arbeitsraum, Auslenkung eines Robotermanipulators, Geschwindigkeit, Beschleunigung, Ruck, etc.) betreffen und/oder kraft- und/oder momentenabhängige Grenzwerte sowie Kombination aus diesen Werten. Zusätzlich oder alternativ kann ein Parameter eines Modells, insbesondere eines geschätzten Modells, überwacht werden, wobei das Modell vorzugsweise auf Basis einer erfassten Information geschätzt wird. Eine Überwachung erfolgt in einer Ausführung kontinuierlich, diskret, periodisch und/oder in unregelmäßigen Abständen, insbesondere ereignisgesteuert. Vorzugsweise wird der Robotermanipulator, insbesondere eine oder mehrere Robotermanipulatorachsen des Robotermanipulators, in einen sicheren Zustand überführt, wenn eine Überwachung ein Fehlverhalten registriert. Ein sicherer Zustand kann durch einen Not-Halt erreicht werden und/oder durch eine Weichschaltung, insbesondere bestimmter Achsen eines Robotermanipulators.

In einer Ausführung versorgt eine Energieversorgung im Sinne der vorliegenden Erfindung ein oder mehrere, insbesondere alle, Antriebe des Robotermanipulators mit elektrischer Energie. Die Energieversorgung kann aus einem, insbesondere öffentlichem, Energienetz und/oder einem autonomen Energienetz gespeist werden. Zusätzlich oder alternativ kann sich eine Energieversorgung aus wenigstens einer Batterieanordnung und/oder einem alternativem Energiespeicher speisen. Vorzugsweise sind mehrere Antriebe, insbesondere alle Antriebe, des Robotermanipulators mit derselben Energieversorgung verbunden. Vorzugsweise umfasst die Energieversorgung einen Zwischenkreis, über den ein oder mehrere Antriebe mit Energie versorgt werden. Insbesondere können auch eine oder mehrere Bremsen des Robotermanipulators über den Zwischenkreis mit Energie versorgt werden. Vorzugsweise ist die Energieversorgung mit einer Steuerung verbunden. Die Energieversorgung ist in einer Ausführung dazu eingerichtet, eine Energiezufuhr zu einem oder mehreren Antrieben, insbesondere zu einem oder mehreren Motoren und/oder zu einer oder mehreren Bremsen dieser Antriebe zu reduzieren und/oder zu erhöhen. Vorzugsweise wird durch die Energieversorgung hinreichend Energie zum Betreiben einer oder mehrerer Antriebe und/oder Bremsen bereitgestellt. Weiterhin vorzugsweise können auch sämtliche andere Peripheriegeräte, z. B. Greifer, Steuerung, Sicherheitssteuerung, etc. über dieselbe Energieversorgung mit Energie versorgt werden.

Nach einer Ausführung des erfindungsgemäßen Verfahrens wird, insbesondere zum Erfassen einer Fehlfunktion der Bremse, eine Größe auf Basis einer Position der Achse und/oder einer zeitlichen Ableitung der Position der Achse überwacht. Eine solche Größe im Sinne der Erfindung kann insbesondere Informationen über eine Vorrichtung und/oder einen Prozess betreffen. Vorzugsweise betrifft eine solche Größe Informationen über die Bremse und/oder eine Funktion der Bremse. Beispielsweise kann die Achsenposition überwacht werden, welche nach dem Festlegen der Achse ordnungsgemäß eingenommen wurde. Im Falle einer Veränderung dieser Position, während die Bremse der Achse geschlossen ist und für einen Stillstand sorgen soll, kann auf eine Fehlfunktion der Bremse geschlossen werden. Diese Fehlfunktion hätte dann erfindungsgemäß zur Folge, dass die Aktuierung des Antriebs wieder aktiviert wird, um eine weitere Positionsveränderung, im schlimmsten Fall ein Absacken der gesamten Achse, zu reduzieren, insbesondere zu verhindern, und/oder die Achse wieder in einen sicheren Zustand zu überführen. Neben der Position können zusätzlich oder alternativ auch positions-basierte Größen überwacht werden, insbesondere eine Geschwindigkeit einer Achse und/oder eine Beschleunigung einer Achse. Ebenfalls ist es möglich, anstelle oder zusätzlich zur Überwachung der Achse, eine Bewegung des gesamten Robotermanipulators, z. B. seine kartesische Bewegung bzw. seine Bewegung im Arbeitsraum, zu überwachen und vorzugsweise daraus zu schließen, ob die Bremse ordnungsgemäß funktioniert oder einen Fehlerzustand aufweist.

Nach einer Ausführung des erfindungsgemäßen Verfahrens wird eine Größe, insbesondere zum Erfassen einer Fehlfunktion der Bremse, auf Basis eines Stromes und/oder einer Spannung des Antriebs der Achse überwacht. Beispielsweise kann der Antrieb auf einen Strom hin überwacht werden, welcher durch eine Bewegung des Antriebs, also durch eine Bewegung der Achse, in den Antrieb induziert wird. Entsprechend kann bei einer Erfassung eines solchen Induktionsstromes auf eine Bewegung des Antriebs bzw. der Achse des Robotermanipulators geschlossen werden und somit auf einen Fehlerzustand der Bremse, wodurch wiederum eine Aktivierung der Aktuierung des Antriebs ausgelöst wird. Ebenso kann eine solche Größe auf Basis einer Spannung des Antriebs definiert sein. Zusätzlich und/oder alternativ kann eine Größe im Sinne der vorliegenden Erfindung eine Funktion aus einem Strom und einer Spannung sein. Insbesondere kann eine solche Größe auch als eine Funktion definiert sein, welche andere für die Funktion der Bremse relevanten Größen umfasst, z. B. positions-basierte Größen.

In einer Ausführung des erfindungsgemäßen Verfahrens wird eine Größe, insbesondere zum Erfassen einer Fehlfunktion der Bremse, auf Basis einer Kraft des Antriebs der Achse überwacht. Eine solche Kraft kann, wie vorstehend erläutert, auch einen Moment darstellen. Die Kraft kann über einen entsprechenden Kraftsensor erfasst werden, der sich an der Achse befindet oder am Robotermanipulator so angeordnet ist, dass er mechanische Auswirkungen der Achse entsprechend erfassen kann. Beispielsweise kann nach dem Festlegen der Achse eine Kraft gemessen werden, welche diese im Stillstand auf den Sensor ausübt. Im Falle einer Bremsenfehlfunktion, die zu einer Bewegung der Achse bzw. des Robotermanipulators führt, wird diese im Stillstand des Robotermanipulators erfasste Kraft sich verändern. Entsprechend kann auf Basis einer solchen Kraftveränderung auf eine Fehlfunktion der Bremse zurückgeschlossen werden und entsprechend eine Aktivierung der Aktuierung eines Antriebs erfolgen, um den Robotermanipulator wieder in einen sicheren Zustand zu überführen.

In einer Ausführung des erfindungsgemäßen Verfahrens wird die Bremse bewertet, während sie geschlossen ist. Eine solche Bewertung kann insbesondere unter Zuhilfenahme eines oder mehrerer Sensoren erfolgen, welche Informationen über die Funktionsfähigkeit der Bremse erfassen. Beispielsweise kann ein Druckkraftsensor Informationen über die Anpresskraft der Bremse erfassen. Zusätzlich oder alternativ kann über einen Sensor auch eine andere Größe, insbesondere eine elektrische Größe, betreffend die Bremse, erfasst werden, um daraus eine Funktion der Bremse bewerten zu können. Zusätzlich oder alternativ kann über einen Zähler die Anzahl der Bremseneinfälle ermittelt und über diese Information die Bremse bewertet werden. Zusätzlich oder alternativ kann über einen Zeitschalter eine Dauer der Bremsenaktivität erfasst werden und darauf wiederum verschiedene Größen ermittelt werden, z. B. eine Gesamtdauer der Aktivierung der Bremse und/oder eine durchschnittliche Dauer der Aktivierung der Bremse. Zusätzlich oder alternativ kann die Einfallszeit der Bremse über einen Zeitschalter ermittelt werden, um daraus Informationen zur Bewertung der Bremse zu erhalten. Bevorzugt kann in einer bestimmten Stellung der Achse eine Haltekraft und/oder Bremskraft der Bremse erfasst werden, welche zum Festlegen der Achse erforderlich ist und dadurch die Bremse bewertet werden. In einer Ausführung kann eine solche bestimmte Stellung der Achse an den Stellen der größten Gravitationsbelastung definiert sein.

Nach einer Ausführung des erfindungsgemäßen Verfahrens wird durch den Antrieb eine Kraft erzeugt, während die Bremse geschlossen ist. Dadurch kann die Funktion der Bremse getestet werden und die Bremse entsprechend ihrer Leistungsfähigkeit bewertet werden. Ein solcher aktiver Bremsentest kann insbesondere dadurch implementiert sein, dass die Kraft kontinuierlich ansteigt. Dieser kontinuierliche Anstieg kann insbesondere linear erfolgen oder degressiv, so dass die Zunahme der Kraft auf die Bremse kontinuierlich abnimmt. Zusätzlich oder alternativ kann die Kraft stufenweise erhöht werden, wobei je nach Stufe ein vorgegebener Kraftanstieg realisiert wird. Bevorzugt wird eine Kraft bis auf eine vorgegebene Maximalkraft erhöht. Zusätzlich oder alternativ wird die Kraft durch den Antrieb solange erhöht, bis der Robotermanipulator eine Losbrechbewegung ausführt. Durch die Losbrechbewegung, während die Bremse geschlossen ist, wird angezeigt, welche Kraft die Bremse in ihrem derzeitigen Zustand maximal halten kann. Dabei kann das zusätzlich auf die Bremse wirkende Gravitationsmoment mit einbezogen werden, um eine möglichst genaue Schätzung der aktuell möglichen Maximalkraft der Bremse zu erhalten.

In einer Ausführung wird die erfasste bzw. ermittelte Kraft, welche eine Bremsfunktion der Bremse repräsentiert, an eine Steuerung des Robotermanipulators und/oder an eine robotermanipulator(steuerungs)-externe Vorrichtung kommuniziert. Dadurch kann eine Bewertung der Bremse lokal in der Steuerung des Robotermanipulators vorgenommen werden und/oder in einem zentralen Datenverarbeitungssystem, welches mit dem Robotermanipulator in Verbindung steht. Somit kann vorteilhaft z. B. eine Wartung der Bremse, insbesondere ein Wechsel der Bremse, durch die Steuerung signalisiert bzw. angezeigt werden.

Nach einer Ausführung wird an eine Steuerung des Robotermanipulators und/oder einer robotermanipulator(steuerungs)-externen Vorrichtung signalisiert, wenn ein Fehlerzustand der Bremse erfasst wird. Dadurch kann insbesondere ein übergeordnetes Sicherheitssystem, welches z. B. den Robotermanipulator und eine Robotermanipulatorzelle, in der sich der Robotermanipulator bewegt, entsprechend angesteuert werden und geeignete Sicherheitsfunktionen ausgelöst werden, wenn ein Fehlerzustand der Bremse erfasst wird. Eine solche Sicherheitsfunktion kann z. B. ein Stillsetzen des Robotermanipulators betreffen oder ein Anhalten einer Zuführeinrichtung, welche vom Robotermanipulator zu bearbeitende Objekte in die Robotermanipulatorzelle führt.

Nach einer Ausführung wird die Bremse zusätzlich durch eine weitere Überwachung beobachtet, die eine Sicherheitsfunktion auslöst, wenn ein anderer, weiterer Fehlerzustand erfasst wird. Durch diese weitere Überwachung können insbesondere Fehlerzustände erfasst werden, welche durch die erste Überwachung nicht beobachtet werden können. Eine solche Überwachung kann insbesondere eine Temperaturüberwachung der Bremse betreffen, wobei z. B. ab einer Überschreitung einer bestimmten Maximaltemperatur auf eine fehlerhafte Bremse geschlossen wird. Zusätzlich oder alternativ kann eine solche weitere Überwachung eine Überwachung einer Sicherheitssteuerung sein, welche die Funktion der erfindungsgemäßen ersten Überwachung überwacht. Die weitere Überwachung kann sich insbesondere auf eine oder mehrere der Größen beziehen, welche auch durch die erste Überwachung überwacht werden. In diesem Fall können eine oder mehrere Überwachungsgrenzen der weiteren Überwachung so dimensioniert werden bzw. sein, dass zunächst die erste Überwachung anspricht und die weitere Überwachung erst dann anspricht, wenn auf eine Fehlfunktion der ersten Überwachung geschlossen werden kann. Betreffen die erste Überwachung und die weitere Überwachung z. B. eine Veränderung der Position im Stillstand der Robotermanipulatorachse, so kann die Positionsänderung, die notwendig ist, damit die weitere Überwachung einen Fehlerzustand signalisiert, größer definiert sein als die Positionsänderung, die definiert ist, die erste Überwachung auf einen Fehlerzustand der Bremse schließen zu lassen. Dadurch wird sichergestellt, dass die weitere Überwachung erst dann eingreift, wenn auf eine Fehlfunktion der ersten Überwachung geschlossen werden kann.

Dadurch wird die Gesamtsicherheit des Robotermanipulators erhöht und auf der anderen Seite ein Eingriff in den normalen Betriebsablauf des Robotermanipulators minimiert, da zunächst bei Ansprechen der (ersten) Überwachung die Aktuierung der Achse durch die Bewegungsregelung (re-)aktiviert wird und die weitere Überwachung, insbesondere eine Sicherheitsüberwachung, die einen STOP 0 oder STOP 1 auslöst, nur aktiviert wird, wenn diese Übernahme der Festlegung der Achse von der fehlerhaften Bremse durch die Bewegungsregelung bzw. den Antrieb nicht ordnungsgemäß funktioniert.

Nach einer Ausführung des erfindungsgemäßen Verfahrens wird die Bremse geöffnet, wenn ein Fehlerzustand der Bremse erfasst wird. Eine solche Öffnung kann insbesondere dann erfolgen, wenn ein Fehlerzustand durch die erste Überwachung erfasst wird und/oder wenn ein Fehlerzustand durch eine weitere Überwachung erfasst wird. Durch ein Öffnen einer fehlerhaften Bremse wird erreicht, dass Restmomente der Bremse sich nicht als Störgröße auf die reaktivierte Regelung der Aktuierung des Antriebs auswirken, die dann beispielsweise ein Festlegen der Achse erreichen soll.

Weitere Vorteile und Merkmale ergeben sich aus den Unteransprüchen und den Ausführungsbeispielen. Hierzu zeigt, teilweise schematisiert:
- Fig. 1: einen zeitlichen Verlauf einer Geschwindigkeit und eines Leistungsbedarfs einer Achse einer Robotermanipulators nach einer Ausführung der vorliegenden Erfindung; und
- Fig. 2: einen zeitlichen Verlauf der Geschwindigkeit und des Leistungsbedarfs einer Achse des Robotermanipulators nach einer weiteren Ausführung der vorliegenden Erfindung; und
- Fig. 3: ein Ablaufdiagramm nach einer Ausführung der Erfindung.

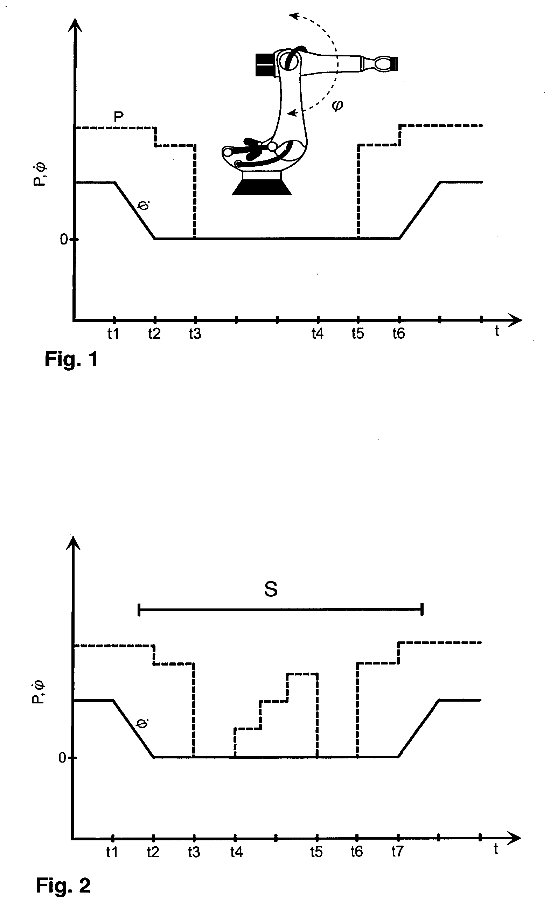

Fig. 1 zeigt einen Ausschnitt aus einer Trajektorie einer Robotermanipulatorachse, die durch einen Industrieroboter ausgeführt wird, wobei die Geschwindigkeit *ϕ̇* sowie ein Leistungsverlauf P, der abhängig verschiedener Zustände des Robotermanipulators ist, über der Zeit t dargestellt ist. Dabei ist die Zeitachse nicht zwingend linear skaliert, sondern beschreibt den allgemeineren Fall einer qualitativen zeitlichen Anordnung der abgebildeten Zeitpunkte.

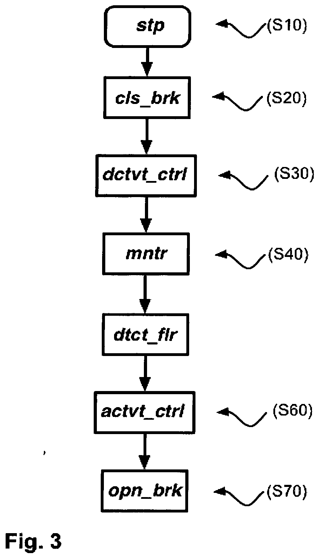

Bis zum Zeitpunkt t1 verfährt die Achse 3 des Robotermanipulators, die in Fig. 1 durch einen strichlierten Bewegungs-Doppelpfeil angedeutet ist, unter einer Bewegungsregelung seiner Steuerung mit einer positiven, konstanten Geschwindigkeit *ϕ̇* > 0. Zum Zeitpunkt t1 kommandiert die Bewegungsregelung einen Stopp und die Geschwindigkeit der Achse 3 verringert sich linear bis auf *ϕ̇* = 0. Ab dem Zeitpunkt t2 ist die Achse 3 des Robotermanipulators im Stillstand. Nach dem Stoppen der Achse (vgl. Fig. 3: Schritt S10) wird die Bremse der Achse geschlossen (S20). Die Bremse ist eine Sicherheits- bzw. normal geschlossene Bremse, welche bei Deaktivierung einer Energiezufuhr einfällt. Dadurch bedingt reduziert sich zu einem Zeitpunkt kurz nach dem Zeitpunkt t2 die Leistungsaufnahme der Achse 3 um die zum Öffnen der Bremse notwendige Leistung.

Nach dem Schließen der Bremse wird zum Zeitpunkt t3 die Aktuierung des Antriebs durch die Bewegungsregelung deaktiviert (S30). Die Bewegungsregelung läuft darüber hinaus weiter, wobei sie jedoch keine Energie mehr an den Antrieb überträgt, Damit ist der Antrieb der Achse 3 stromlos.

Zum Zeitpunkt t4, in dem die Achse 3 sich immer noch im Stillstand befindet, erfasst die Überwachung der Bremse, welche die ganze Zeit aktiv ist, einen Fehlerzustand (S40) auf Basis einer Beschleunigungsüberwachung, die eine Beschleunigung der Achse 3 erfasst hat. Dementsprechend wird unmittelbar nach der Signalisierung des Fehlerzustands der Bremse die Aktuierung des Robotermanipulatorantriebs durch die Bewegungsregelung reaktiviert (S60). Die Bewegungsregelung überträgt ab dem Zeitpunkt t5 nun wieder Energie an den Antrieb. Entsprechend erfolgt ein Anstieg der Leistungsaufnahme um die Motorleistung.

Zum Zeitpunkt t6 wird auch die fehlerhafte Bremse geöffnet (S70). Dadurch wird sichergestellt, dass noch durch die Bremse aufgebrachte Bremskräfte nicht die Positionsregelung der Aktuierung der Robotermanipulatorachse beeinträchtigen können.

Fig. 2 zeigt ebenfalls einen Ausschnitt aus einer Trajektorie der Robotermanipulatorachse 3 eines Industrieroboters, wobei ebenfalls deren Geschwindigkeit über der Zeit dargestellt ist sowie ein Leistungsverlauf der Robotermanipulatorachse, welcher abhängig verschiedener Zustände des Robotermanipulators und der Überwachung ist. Dabei ist die Zeitachse wie in Fig. 1 nicht zwingend linear skaliert, sondern beschreibt den allgemeineren Fall einer qualitativen zeitlichen Anordnung der abgebildeten Zeitpunkte.

In dem Beispiel in Fig. 2 wird zunächst ein Stoppen der Achse 3 kommandiert (S10) und die mechanische Bremse der Achse 3 geschlossen (S20). Danach wird die Aktuierung des Antriebs der Achse 3 deaktiviert (S30) und die Überwachung der mechanischen Bremse aktiviert (S40). Aus der Planung der Robotermanipulatortrajektorie wird ermittelt, dass die Stillstandszeit der Achse 3 in diesem Fall ausreichend lang für die Durchführung eines Bremsentestes (S50) ist. Entsprechend wird ab dem Zeitpunkt t4 durch den Antrieb der Achse bei geschlossener mechanischer Bremse stufenweise eine Kraft auf die Achse eingeprägt. Der Anstieg der Kraft erfolgt kontinuierlich und stufenweise bis zu einem vorgegebenen Maximalmoment, welches eine sichere Funktion der Bremse anzeigt. Nach Erreichen des Maximalmoments wird der Bremsentest beendet und die vom Antrieb auf die Achse erzeugte Kraft wird wieder auf 0 reduziert. Nachdem zum Zeitpunkt t6 aus der Bewegungsplanung eine Fahrfreigabe zu erwarten ist, wird die Aktuierung des Antriebs durch die Bewegungsregelung wieder aktiviert. Entsprechend ergibt sich ein Anstieg der Leistung. Des Weiteren wird zum Zeitpunkt t7 die Bremse bestromt, so dass diese sich öffnet und die Achse 3 entsprechend der geplanten Bewegung weiter verfahren werden kann. Da in diesem Fall kein Fehlerzustand der Bremse erfasst wurde, wurde vorher eine Aktivierung der Aktuierung des Antriebs durch die Bewegungsregelung nicht kommandiert.

Fig. 3 zeigt ein Ablaufdiagramm nach einer Ausführung der Erfindung. Dabei wird eine Robotermanipulatorachse zunächst angehalten (Schritt S10). Danach wird eine mechanische Bremse geschlossen (Schritt S20) und die Aktuierung des Antriebs der Robotermanipulatorachse durch die Bewegungsregelung deaktiviert (Schritt S30). Zeitgleich mit der Deaktivierung der Aktuierung des Antriebs wird die Überwachung der Bremse gestartet (Schritt S40). Wenn durch diese ein Fehler der Bremse erfasst wurde (Schritt S50), wird die Aktuierung des Antriebs der Robotermanipulatorachse durch die Bewegungsregelung wieder aktiviert (Schritt S60), um die Robotermanipulatorachse in eine sichere Position zu bewegen bzw. in seiner Position zu halten. Zeitgleich wird die Bremse geöffnet (Schritt S70), damit die Bewegungsregelung nicht durch Bremskräfte gestört wird.

### Bezugszeichenliste

- t: Zeit
- t1-t8: absolute Zeitpunkte
- *ϕ*: Position Achse 3
- *ϕ̇*: Geschwindigkeit der Ache 3 des Robotermanipulators
- P: Leistungsaufnahme der Achse 3
- S: Überwachung aktiv

## Patentansprüche

1. Verfahren zum Festlegen wenigstens einer Achse eines Robotermanipulators wobei die Achse des Robotermanipulators eine mechanische Bremse und einen Antrieb aufweist und das Verfahren die Schritte aufweist:
(S20) Schließen der mechanischen Bremse der Achse;
(S30) Deaktivieren einer durch eine Bewegungsregelung erfolgenden Aktuierung des Antriebs der Achse nach dem Schließen der Bremse;
(S40) Überwachen der mechanischen Bremse;
(S60) Aktivieren der durch die Bewegungsregelung erfolgenden, deaktivierten Aktuierung des Antriebs, falls eine Überwachung einen Fehlerzustand der mechanischen Bremse erfasst,
wobei unter einem Festlegen einer Achse ein Halten der bewegungslosen Achse verstanden wird,
wobei unter einer durch die Bewegungsregelung erfolgenden Aktuierung des Antriebs das Übertragen von Energie durch die Bewegungsregelung an den Antrieb und unter einem Deaktivieren einer durch eine Bewegungsregelung erfolgenden Aktuierung des Antriebs der Achse die Unterbrechung einer solchen Übertragung von Energie verstanden wird.

2. Verfahren nach Anspruch 1, **dadurch gekennzeichnet, dass** zum Überwachen der mechanischen Bremse eine Größe auf Basis einer Position der Achse und/oder einer zeitlichen Ableitung der Position der Achse überwacht wird.

3. Verfahren nach einem der vorhergehenden Ansprüche, **dadurch gekennzeichnet, dass** zum Überwachen der mechanischen Bremse eine Größe auf Basis eines Stromes und/oder einer Spannung des Antriebs der Achse überwacht wird.

4. Verfahren nach einem der vorhergehenden Ansprüche, **dadurch gekennzeichnet, dass** zum Überwachen der mechanischen Bremse eine Größe auf Basis einer Kraft des Antriebs der Achse überwacht wird.

5. Verfahren nach einem der vorhergehenden Ansprüche, **dadurch gekennzeichnet, dass** die Bremse bewertet wird, während diese geschlossen ist.

6. Verfahren nach einem der vorhergehenden Ansprüche, **dadurch gekennzeichnet, dass** der Antrieb eine Kraft erzeugt, während die Bremse geschlossen ist (S50).

7. Verfahren nach dem vorhergehenden Anspruch, **dadurch gekennzeichnet, dass** die Kraft kontinuierlich, insbesondere linear oder degressiv, oder stufenweise und/oder bis zu einer vorgegebenen Kraft erhöht wird, insbesondere bis der Robotermanipulator eine Losbrechbewegung ausführt, und/oder eine vorgegebene Mindestkraft erreicht ist.

8. Verfahren nach einem der beiden vorhergehenden Ansprüche, **dadurch gekennzeichnet, dass** die Kraft erfasst wird und insbesondere einer Steuerung und/oder einer robotermanipulator-externen Vorrichtung kommuniziert wird.

9. Verfahren nach einem der vorhergehenden Ansprüche, **dadurch gekennzeichnet, dass** einer Steuerung des Robotermanipulators und/oder einer robotermanipulator-externen Vorrichtung signalisiert wird, wenn ein Fehlerzustand der Bremse erfasst wird.

10. Verfahren nach einem der vorhergehenden Ansprüche, **gekennzeichnet durch** eine weitere Überwachung der Bremse, wobei eine Sicherheitsfunktion ausgelöst wird, wenn die weitere Überwachung einen weiteren Fehlerzustand erfasst.

11. Verfahren nach einem der vorhergehenden Ansprüche, **dadurch gekennzeichnet, dass** die Bremse geöffnet wird, wenn ein Fehlerzustand der Bremse erfasst wird (S70).

12. Robotermanipulator mit einer Steuerung zum Steuern einer Prozessbewegung und mit wenigstens einer Achse mit einem Antrieb und einer Bremse, wobei eine Überwachung dieser Bremse und eine Bewegungsregelung vorgesehen sind, und wobei Steuerung, Antrieb, Bremse und Überwachung zur Durchführung eines Verfahrens nach einem der vorhergehenden Ansprüche 1-11 eingerichtet sind.

13. Computerprogramm, das ein Verfahren nach einem der Ansprüche 1 bis 11 ausführt, wenn es in der Steuerung eines Robotermanipulators nach Anspruch 12 ausgeführt wird.

14. Computerprogrammprodukt mit Programmcode, der auf einem maschinenlesbaren Träger gespeichert ist und ein Computerprogramm nach Anspruch 13 umfasst.

## Claims

1. A method of fixing at least one axis of a robot manipulator, wherein the axis of the robot manipulator comprises a mechanical brake and a drive, and wherein the method comprises the steps of:
(S20) closing the mechanical brake of the axis;
(S30) deactivating, after the brake has been closed, an actuation of the drive of the axis,
which actuation of the drive of the axis takes place by means of a motion control facility;
(S40) monitoring the mechanical brake;
(S60) activating the deactivated actuation of the drive if a monitoring process detects a fault condition of the mechanical brake, which actuation of the drive of the axis takes place by means of the motion control facility,
wherein fixing an axis is intended to be understood to mean holding the motionless axis,
wherein an actuation of the drive which actuation of the drive takes place by means of the motion control facility is intended to be understood to mean the transmission of energy to the drive by means of the motion control facility, and a deactivation of an actuation of the drive of the axis, which actuation of the drive of the axis takes place by means of a motion control facility, is understood to mean the interruption of such transmission of energy.

2. The method in accordance with claim 1, **characterised in that**, in order to monitor the mechanical brake, a variable is monitored on the basis of a position of the axis and / or on the basis of a time derivative of the position of the axis.

3. The method in accordance with any one of the preceding claims, **characterised in that**, in order to monitor the mechanical brake, a variable is monitored on the basis of a current and / or a voltage of the drive of the axis.

4. The method in accordance with any one of the preceding claims, **characterised in that**, in order to monitor the mechanical brake, a variable is monitored on the basis of a force of the drive of the axis.

5. The method in accordance with any one of the preceding claims, **characterised in that** the brake is assessed while it is closed.

6. The method in accordance with any one of the preceding claims, **characterised in that** the drive generates a force while the brake is closed (S50).

7. The method in accordance with the preceding claim, **characterised in that** the force is increased continuously, in particular in a linear or in a degressive manner, or in a stepwise manner and / or up to a specified force, in particular until the robot manipulator carries out a breakaway movement, and / or until a specified minimum force has been reached.

8. The method in accordance with any one of the two preceding claims, **characterised in that** the force is detected and communicated, in particular to a control device / system and / or to a device which is external to the robot manipulator.

9. The method in accordance with any one of the preceding claims, **characterised in that** a control device / system of the robot manipulator and / or a device external to the robot manipulator is notified by way of a signal when a fault condition of the brake is detected.

10. The method in accordance with any one of the preceding claims, **characterised by** further monitoring of the brake, wherein a safety function is triggered when the further monitoring detects a further fault condition.

11. The method in accordance with any one of the preceding claims, **characterised in that** the brake is opened when a fault condition of the brake is detected (S70).

12. A robot manipulator with a control device / system for controlling a process movement and with at least one axis with a drive and a brake, wherein a monitoring of this brake and a motion control facility are provided, and wherein the control device / system, the drive, the brake and the monitoring are set up for carrying out a method in accordance with any one of the preceding claims 1 to 11.

13. A computer program which carries out a method in accordance with any one of the claims 1 to 11 when it is executed in the control device / system of a robot manipulator in accordance with claim 12.

14. A computer program product which comprises a program code which is stored on a computer readable carrier medium and which comprises a computer program in accordance with claim 13.

## Revendications

1. Procédé d'immobilisation d'au moins un axe d'un manipulateur de robot dans lequel l'axe du manipulateur de robot présente un frein mécanique et un entraînement et le procédé présente les étapes :
(S20) fermeture du frein mécanique de l'axe ;
(S30) désactivation d'un actionnement se produisant par une régulation de mouvement de l'entraînement de l'axe après la fermeture du frein ;
(S40) surveillance du frein mécanique ;
(S60) activation de l'actionnement désactivé, se produisant par la régulation de mouvement, de l'entraînement si une surveillance détecte un état d'erreur du frein mécanique,
dans lequel on entend par une immobilisation d'un axe, un maintien de l'axe sans mouvement,
dans lequel on entend par un actionnement se produisant par la régulation de mouvement de l'entraînement, la transmission d'énergie par la régulation de mouvement à l'entraînement et par une désactivation d'un actionnement se produisant par une régulation de mouvement de l'entraînement de l'axe, l'interruption d'une telle transmission d'énergie.

2. Procédé selon la revendication 1, **caractérisé en ce que** pour la surveillance du frein mécanique une grandeur est surveillée sur la base d'une position de l'axe et/ou d'une dérivée temporelle de la position de l'axe.

3. Procédé selon l'une quelconque des revendications précédentes, **caractérisé en ce que** pour la surveillance du frein mécanique une grandeur est surveillée sur la base d'un courant et/ou d'une tension de l'entraînement de l'axe.

4. Procédé selon l'une quelconque des revendications précédentes, **caractérisé en ce que** pour la surveillance du frein mécanique une grandeur est surveillée sur la base d'une force de l'entraînement de l'axe.

5. Procédé selon l'une quelconque des revendications précédentes, **caractérisé en ce que** le frein est évalué, pendant que celui-ci est fermé.

6. Procédé selon l'une quelconque des revendications précédentes, **caractérisé en ce que** l'entraînement génère une force, pendant que le frein est fermé (S50).

7. Procédé selon la revendication précédente, **caractérisé en ce que** la force est augmentée en continu, en particulier de manière linéaire ou dégressive, ou graduellement et/ou jusqu'à une force prédéfinie, en particulier jusqu'à ce que le manipulateur de robot effectue un mouvement de détachement, et/ou qu'une force minimum prédéfinie est atteinte.

8. Procédé selon l'une quelconque des deux revendications précédentes, **caractérisé en ce que** la force est détectée et communiquée en particulier à une commande et/ou à un dispositif externe au manipulateur de robot.

9. Procédé selon l'une quelconque des revendications précédentes, **caractérisé en ce qu'**il est signalé à une commande du manipulateur de robot et/ou à un dispositif externe au manipulateur de robot lorsqu'un état d'erreur du frein est détecté.

10. Procédé selon l'une quelconque des revendications précédentes, **caractérisé par** une autre surveillance du frein, dans lequel une fonction de sécurité est déclenchée lorsque l'autre surveillance détecte un autre état d'erreur.

11. Procédé selon l'une quelconque des revendications précédentes, **caractérisé en ce que** le frein est ouvert, lorsqu'un état d'erreur du frein est détecté (S70).

12. Manipulateur de robot avec une commande pour la commande d'un mouvement de processus et avec au moins un axe avec un entraînement et un frein, dans lequel une surveillance de ce frein et une régulation de mouvement sont prévues, et dans lequel la commande, l'entraînement, le freinage et la surveillance sont aménagés pour la réalisation d'un procédé selon l'une quelconque des revendications précédentes 1-11.

13. Programme informatique, qui effectue un procédé selon l'une quelconque des revendications 1 à 11, lorsqu'il est réalisé dans la commande d'un manipulateur de robot selon la revendication 12.

14. Produit de programme informatique avec code de programme, qui est enregistré sur un support lisible par machine et comprend un programme informatique selon la revendication 13.
